# EUROPÄISCHE PATENTSCHRIFT

(11) **EP 1 976 722 B1**
(45) Veröffentlichungstag und Bekanntmachung des Hinweises auf die Patenterteilung: **04.07.2018**
(21) Anmeldenummer: 07711141.7
(22) Anmeldetag: 10.01.2007
(51) Int. Cl.: B60L 13/06, B61L 25/02

(54) **VORRICHTUNG ZUR ERZEUGUNG VON POSITIONSSIGNALEN FÜR SPURGEBUNDENE FAHRZEUGE, INSBESONDERE MAGNETSCHWEBEFAHRZEUGE**
DEVICE FOR PRODUCING POSITION SIGNALS FOR TRACK-BOUND VEHICLES, PARTICULARLY MAGNETICALLY LEVITATED VEHICLES
DISPOSITIF POUR GÉNÉRER DES SIGNAUX DE POSITION POUR DES VÉHICULES SUR RAIL, NOTAMMENT POUR DES VÉHICULES À SUSTENTATION MAGNÉTIQUE

(30) Priorität: 24.01.2006 DE 102006003679
(43) Veröffentlichungstag der Anmeldung: 08.10.2008
(73) Patentinhaber: ThyssenKrupp Transrapid GmbH, 34127 Kassel (DE)
(72) Erfinder: ZHENG, Qinghua, 80331 München (DE); FRANTZHELD, Jürgen, 81476 München (DE)
(74) Vertreter: Lorenz, Bernd Ingo Thaddeus
(86) Internationale Anmeldenummer: PCT/DE2007/000045
(87) Internationale Veröffentlichungsnummer: WO 2007/085224

(56) Entgegenhaltungen:
- WO-A1-01/66401
- DE-A1- 2 222 266
- DE-A1- 2 750 048
- DE-A1- 10 232 720
- FR-A1- 2 667 694
- GB-A- 1 245 534
- GB-A- 1 501 372

## Beschreibung

Die Erfindung betrifft eine Vorrichtung der im Oberbegriff des Anspruchs 1 angegebenen Gattung.

Spurgebundene Fahrzeuge wie z. B. solche von Magnetschwebebahnen werden häufig fahrerlos betrieben. Die Steuerung der Fahrzeuge erfolgt in solchen Fällen von einer zentralen Leitstelle aus, wobei die Geschwindigkeit der Fahrzeuge für jeden Ort längs des zugehörigen Fahrwegs fest vorgegeben ist. Eine notwendige Voraussetzung für einen fahrerlosen Betrieb ist das Vorhandensein einer Vorrichtung, mittels derer die aktuelle Fahrzeugposition permanent und automatisch überwacht werden kann.

Bei einer bekannten Vorrichtung (DE 33 03 961 C2, DE 10 2004 015 496 A1) sind zu diesem Zweck längs des Fahrwegs Messleisten mit Markierungen angebracht. Jede Markierung enthält eine absolute Lageinformation in binär codierter Form und gibt daher eine genaue Position des Fahrzeugs längs des Fahrwegs an. Durch Abtastung der Messleiste und Decodierung der an ihr befindlichen Informationen mit am Fahrzeug installierten Sensoren und Auswerteeinheiten werden Positionssignale gewonnen, die per Funk an die zentrale Leitstelle übertragen werden. Außerdem liefern die Markierungen bei Magnetschwebefahrzeugen, die mit Langstator-Linearmotoren betrieben werden, auch Informationen über die genaue Lage des am Fahrzeug z. B. mit Hilfe von Tragmagneten erzeugten Erregerfeldes relativ zu den Zähnen und Nuten des Langstators. Aus diesen relativen Lageinformationen wird die Phasenlage der in Längsrichtung des Langstators fortschreitenden, das Fahrzeug antreibenden Strombelagswelle bestimmt, um stabile Schubkräfte entwickeln zu können. Schließlich liefern die Markierungen auch Zeitinformationen, die Auskunft darüber geben, wann irgendein Ort längs des Fahrwegs erreicht wird.

Die beschriebene Art der Erzeugung von Positionssignalen hat den Nachteil, dass die auf den Messleisten befindlichen Informationen von den mit hoher Geschwindigkeit betriebenen Fahrzeugen aus nicht nur registrieren, sondern auch entschlüsselt werden müssen. Je größer die Zahl der für die Codierung benötigten Bits ist, um so stärker machen sich mögliche Störungen wie z. B. das Rauschen bemerkbar. Um allen Ansprüchen gerecht zu werden, ist daher ein hoher operativer Aufwand zur Sicherstellung einer geringen Störanfälligkeit erforderlich. Außerdem sind die Ausbildung und Montage der Messleisten zeitaufwändig und mit hohen Kosten verbunden.

Aus der FR 2 667 694 A1 ist eine Vorrichtung bekannt, die mit polarisierten elektromagnetischen Wellen arbeitet. Die polarisierten Wellen treffen dabei auf passive Markierungen, welche die Polarisationsrichtung ändern. Vorzugsweise wird durch die Anordnung dieser Markierungen eine Codierung erreicht, um damit Positionsinformationen übermitteln zu können.

Die GB 1 245 534 A beschäftigt sich mit der Positionsbestimmung von Straßenfahrzeugen. Dabei besteht das Problem, dass die genaue Fahrtroute nicht festgelegt ist. Vor diesem Hintergrund ist zwingend eine Codierung von am Fahrbahnrand angeordneten Markierungen notwendig, um den aktuellen Ort bestimmen zu können.

Aus der GB 1 501 372 ist eine Vorrichtung mit den Merkmalen des Oberbegriffes des Patentanspruches 1 bekannt, wobei die einzelnen Markierungen codiert sind. Bei dem Erfassen einer Markierung kann diese also individuell identifiziert werden und anhand von abgespeicherten Daten auch räumlich zugeordnet werden. Es wird vorgeschlagen, den Abstand zwischen den Markierungen sowie den Wert der Codierung zufällig zu variieren. Bezüglich der zeitlichen Erfassung und der Reihenfolge der aufgenommenen Codierungen ergibt sich dann eine besonders hohe Zuverlässigkeit und bei einer geeigneten Steuerung auch eine Redundanz. Somit wird ein auf codierten Markierungen beruhendes System weiterentwickelt und verbessert. Es muss jedoch sichergestellt werden, dass die Codierungen korrekt erfasst und ausgelesen werden können.

Außer mit Vorrichtungen der eingangs bezeichneten Gattung kann eine Positionsbestimmung grundsätzlich auch mit Hilfe von satellitengestützten Navi gationssystemen vorgenommen werden, die unter Bezeichnungen wie GPS (Global Positioning System), Galileo, Euteltracs od. dgl. bekannt und bereits in Betrieb sind oder zukünftig in Betrieb genommen werden sollen. Bisher haben derartige Navigationssysteme allerdings den Nachteil, dass ihre Messgenauigkeit nur einige Meter beträgt, zumindest wenn es sich um nicht militärische, der Allgemeinheit zugängliche und mit einem vertretbaren Aufwand nutzbare Navigationssysteme handelt. Die mit diesen Navigationssystemen erhaltenen, aktuellen Ortssignale können daher beispielsweise nicht zur Ermittlung der Pollage bei Langstator-Linearmotoren eingesetzt werden, weil deren Langstatoren Zahn/Nut-Teilungen von z. B. 86 mm aufweisen und daher Genauigkeiten im Zentimeterbereich erforderlich wären.

Ausgehend davon besteht das technische Problem der Erfindung darin, die Vorrichtung der eingangs bezeichneten Gattung so auszubilden, dass sie eine präzise und weitgehend störungsfreie Ortung mit vergleichsweise einfachen technischen Mitteln ermöglicht.

Zur Lösung dieser Aufgabe dienen die kennzeichnenden Merkmale des Anspruchs 1.

Die Erfindung bringt den wesentlichen Vorteil mit sich, dass sie eine Trennung der Funktionen "Markierung registrieren" und "Markierung identifizieren" ermöglicht. Die Markierungen brauchen daher keine codierten Lageinformationen mehr zu liefern, sondern nur noch einfache Informationen im Sinne von Ja/ Nein-Informationen beinhalten. Derartige Informationen können sicher und ohne großen Aufwand auch von schnell fahrenden Fahrzeugen aus erkannt werden. Außerdem lassen sich handelsübliche, preisgünstige Empfänger für das jeweils benutzte Navigationssystem verwenden, da an dieses keine extremen Genauigkeitsanforderungen gestellt werden.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 einen schematischen Vertikalschnitt durch ein Magnetschwebefahrzeug und einen Fahrweg dafür;
Fig. 2 schematisch das Funktionsprinzip einer erfindungsgemäßen Vorrichtung anhand einer Draufsicht auf einen mit Markierungen versehenen Fahrweg;
Fig. 3 schematisch anhand einer Liste die Verteilung und Zuordnung der in Längsrichtung des Fahrwegs nach Fig. 1 angebrachten Markierungen;
Fig. 4 schematisch einen Sensor zur Abtastung von in Längsrichtung des Fahrwegs nach Fig. 1 angebrachten Markierungen;
Fig. 5 ein Blockschaltbild der erfindunggemäßen Vorrichtung; und
Fig. 6 ein zweites Ausführungsbeispiel für am Fahrweg angebrachte Markierungen und einen zu deren Abtastung geeigneten Sensor.

Die erfindungsgemäße Vorrichtung wird zunächst allgemein am Beispiel der Erzeugung von Lagesignalen für ein spurgebundenes Fahrzeug und speziell am Beispiel einer Magnetschwebebahn mit einem synchronen Langstator-Linearmotor beschrieben. Für den Fachmann ist jedoch klar, dass die erfindungsgemäße Vorrichtung in entsprechender Abwandlung auch bei anderen spurgebundenen Fahrzeugsystemen angewendet werden kann.

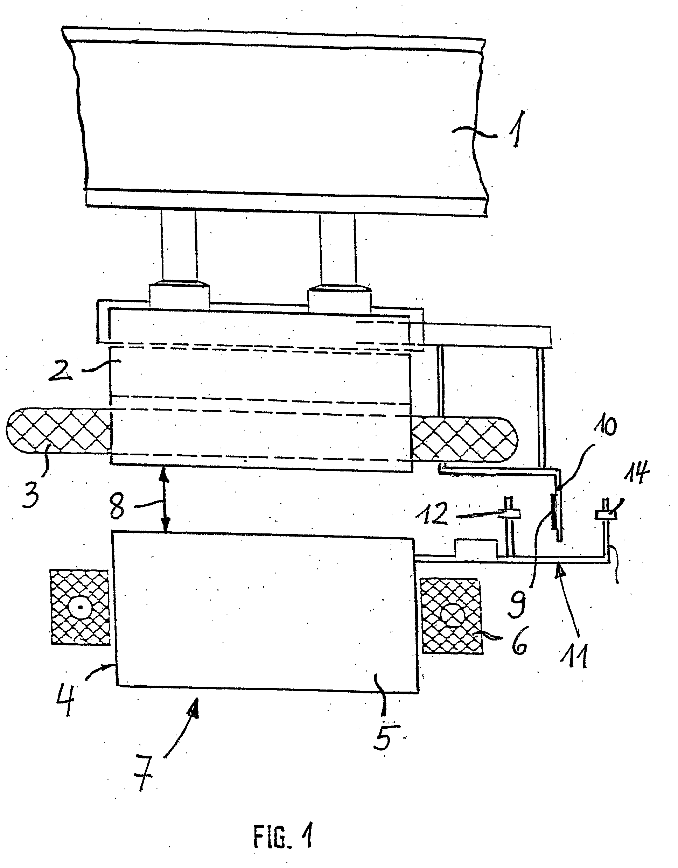

Nach Fig. 1 enthält die Magnetschwebebahn einen Fahrweg 1, an dem ein aus einzelnen Statorpaketen gebildeter und in Fahrtrichtung erstreckter Langstator 2 eines Langstator-Linearmotors befestigt ist. Der Langstator 2 weist an seiner Unterseite abwechselnd Nuten und Zähne auf. In die Nuten ist eine Dreiphasen-Wechselstrom-Wicklung eingelegt, die mit Drehstrom variabler Amplitude und Frequenz gespeist wird. Das Erregerfeld des Langstator-Linearmotors wird von Tragmagneten 4 erzeugt, die aus Kernen 5 und diese umgebenden Wicklungen 6 bestehen, an einem Fahrzeug 7 montiert sind und gleichzeitig der Funktion "Tragen" dienen, um zwischen dem Fahrweg 1 bzw. dem Langstator 2 und dem Fahrzeug 7 bzw. den Tragmagneten 4 beim Betrieb einen für den Schwebezustand charakteristischen Tragspalt 8 herzustellen.

Zur Ermittlung der jeweiligen Fahrzeuglage sind längs des Fahrwegs Markierungen 9 in Form von Informationsgebern angebracht. Jede Markierung 9 nimmt vorzugsweise eine genau definierte Lage relativ zum Langstator 2 bzw. zu dessen Nuten und Zähnen ein, um in an sich bekannter Weise eine für die Bestimmung der Pollage eindeutige Zuordnung zu erhalten. Die Markierungen 9 können z. B. aus elektrisch leitenden Schichten bestehen, die auf Scheiben oder Leisten 10 aus einem elektrisch isolierenden Material angebracht sind, und z. B. alle 200 m längs des Fahrwegs 1 so montiert sein, dass jede einzelne Markierung 9 eindeutig auch einer absoluten Position des Fahrzeugs 7 längs des Fahrwegs 1 zugeordnet ist.

Fig. 1 zeigt außerdem schematisch einen z. B. induktiven Sensor 11, der einen hochfrequenten, auf einer Seite der Markierungen 9 angeordneten Sender 12 und einen auf der anderen Seite der Markierungen 9 angeordneten Empfänger 14 enthält, um die abwechselnd aufeinander folgenden Scheiben 10 und die Zwischenräume zwischen ihnen zu erkennen.

Vorrichtungen der beschriebenen Art sind z. B. aus den eingangs genannten Druckschriften DE 33 03 961 C2 und DE 10 2004 015 496 A1 bekannt, die hiermit der Einfachheit halber durch Referenz auf sie zum Gegenstand der vorliegenden Offenbarung gemacht werden.

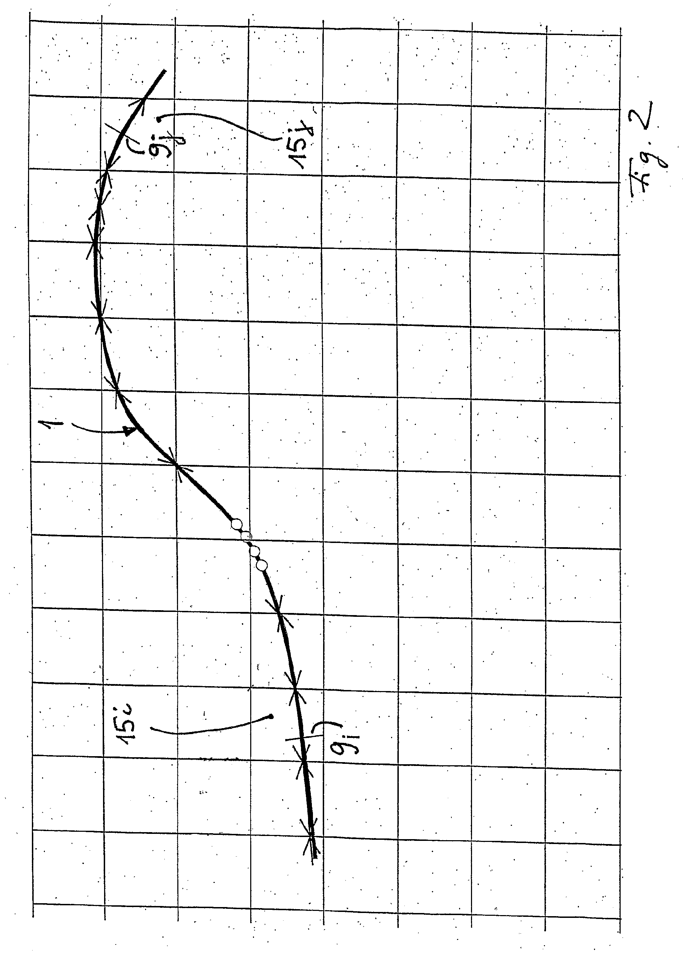

Fig. 2 zeigt beispielhaft einen Ausschnitt des Fahrwegs 1 in der Draufsicht. In Längsrichtung des Fahrwegs 1 sind schematisch zwei der beschriebenen, mit den Bezugszeichen 9i und 9j versehene Markierungen angebracht. Außerdem zeigt Fig. 2 ein Raster, dessen Linien z. B. Längen- und Breitengraden oder analog dazu den x- und y-Werten eines gedachten kartesischen Koordinatensystems entsprechen. Das Raster wird von einem durch Satelliten gestützten Navigationssystem, z. B. dem bekannten und von den USA betriebenen GPS-System aufgespannt. Da die Anforderungen an die Genauigkeit des Navigationssystems für die Zwecke der Erfindung vergleichsweise gering sind, kann z. B. angenommen werden, dass die Messgenauigkeit 5 m bis 20 m beträgt. Die in Fig. 2 gezeigten Rasterlinien, die Planquadrate 15i, 15j, Gitterflächen od. dgl. definieren, weisen daher z. B. Abstände voneinander auf, die um 5 m bis 20 m von den exakten Abständen abweichen können.

Erfindungsgemäß werden die Markierungen 9i, 9j in Längsrichtung des Fahrwegs 1 so angeordnet und/oder die in Fig. 2 angedeuteten Planquadrate 15i, 15j so groß gewählt, dass jede Markierung 9i, 9j etwa in der Mitte eines zugeordneten Planquadrats 15i, 15j liegt oder umgekehrt jedes Planquadrat 15i, 15j höchstens genau eine zugeordnete Markierung 9i, 9j in sich aufnimmt.

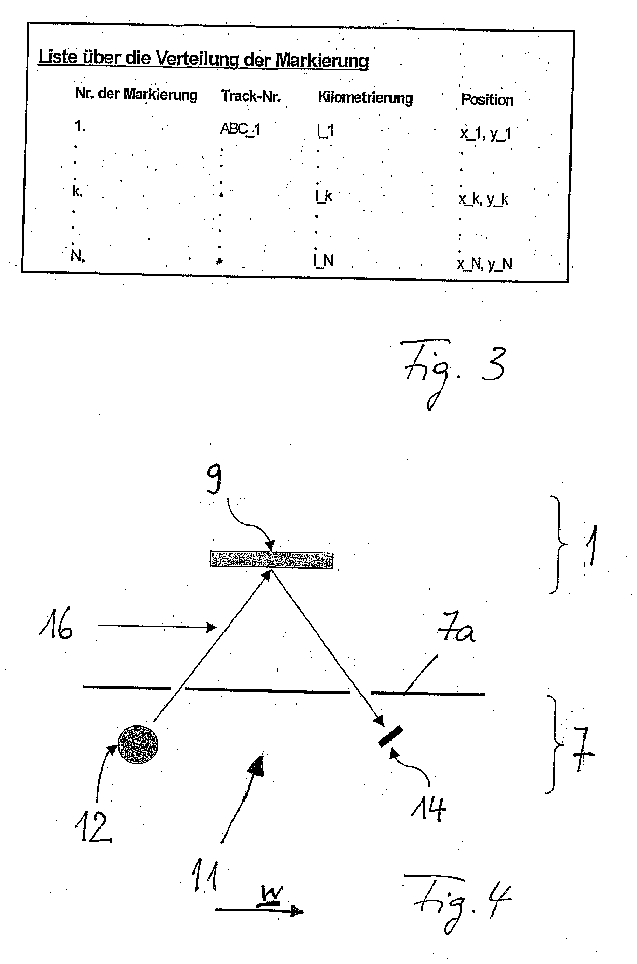

In Fig. 3 ist anhand einer Liste schematisch dargestellt, welche Bedeutung die einzelnen Markierungen 9i, 9j usw. haben.

Als "Track-Nr. ABC" wird hier ein beliebiger Fahrweg 1 oder, wenn es sich um einen Fahrweg mit mehreren Spuren handelt, eine ausgewählte Spur dieses Fahrwegs verstanden.

In der Spalte "Nr. der Markierung" sind die längs eines Fahrwegs ABC_1 vorhandenen Markierungen der Reihe nach enthalten und beispielhaft mit der Numerierung 1... k... N. versehen. Beispielsweise sind diese Markierungen in Abständen von ca. 200 m angeordnet und genau auf eine vorgewählte Nut oder einen vorgewählten Zahn des Langstators 2 (Fig. 1) ausgerichtet.

In der Spalte "Position" der Fig. 3 sind die Planquadrate 15i, 15j aufgeschrieben, die vom jeweiligen Navigationssystem geliefert werden und den Markierungen 1... k.... N einzeln zugeordnet sind. Im Ausführungsbeispiel liegt somit die Markierung 1. in einem Planquadrat x_1, y_1 usw., während die Markierung N. entsprechend im Plan- quadrat x_N, y_N liegt.

Schließlich enthält die Liste der Fig. 3 noch eine Spalte "Kilometrierung", in der die genauen Abstände 1_1, 1_k ... 1_N angegeben sind, die die zugehörigen Markierungen von einem Bezugspunkt, z. B. dem Anfangspunkt des Fahrwegs 1, haben.

Die Liste nach Fig. 3 enthält somit für die Spur bzw. den Fahrweg ABC_1 alle Daten, die erforderlich sind, um die Lage der Markierungen eindeutig zu definieren bzw. zu bestimmen. Wird beispielsweise durch den Sensor 11 des Fahrzeugs 7 bei dessen Vorbeifahrt an der Markierung k. in Fig. 3 (oder 9i in Fig. 2) deren Existenz angezeigt, dann kann das nur bedeuten, dass sich das Fahrzeug 7 gerade im zugehörigen Planquadrat x_k, y_k (oder 15i) bzw. beim Kilometer 1_k befindet. Umgekehrt ist für den Fall, dass sich das Fahrzeug in der Position x_k, y_k (bzw. 15i in Fig. 2) befindet und gleichzeitig eine Markierung 9 erkannt wird, eindeutig klar, dass es sich nur um die Markierung k. in Fig. 3 (bzw. die Markierung 9i in Fig. 2) handeln kann, weil andere Markierungen in dem Planquadrat x_k, y_k bzw. 15j nicht vorhanden sind. Daraus folgt einerseits, dass es zur genauen Ermittlung der Lage des Fahrzeugs 7 nur erforderlich ist, die Markierungen k. bzw. 9i, 9j usw. zu erkennen, d. h. die Markierungen k., 9i, 9j müssen nicht zusätzlich mit einer Codierung versehen sein, die ihre genaue Lage angibt. Für diese Erkennung genügt vielmehr eine einfache, z. B. aus nur einem Bit bestehende Ja/Nein-Information ("Markierung vorhanden" oder "Markierung nicht vorhanden"). Andererseits braucht aber auch das verwendete Navigationssystem keine hohe Messgenauigkeit haben. Für die Zwecke der Erfindung ist es ausreichend, wenn jedem Planquadrat x_k, y_k bzw. 15i, 15j eindeutig entweder keine oder nur eine einzige Markierung k., 9i, 9j zugeordnet wird.

Fig. 4 zeigt schematisch einen am Fahrzeug 7 angebrachten Sensor 11 (Fig. 1) mit dem hier als Lichtquelle, insbesondere als Laser ausgebildeten Sender 12 und dem hier als Fotodetektor (Fotodiode) ausgebildeten Empfänger 14. Mit dem Bezugszeichen 7a ist in Fig. 4 eine Außenwand des Fahrzeugs 7 angedeutet.

Von dem nicht näher dargestellten Fahrweg 1 ist in Fig. 4 lediglich eine Markierung 9 gezeigt, die beim Betrieb des Fahrzeugs 1 in Richtung eines Pfeils w von diesem passiert wird. Die Markierung 9 ist im Ausführungsbeispiel als ein dem Fahrzeug 7 zugewandter Spiegel ausgebildet. Dabei sind die Lagen der Markierungen 9, des Senders 12 und des Empfängers 14 relativ zueinander so gewählt, dass ein vom Sender 12 emittierter Licht- bzw. Laserstrahl 16 bei der Vorbeifahrt des Fahrzeugs 7 kurzzeitig auf die Markierung 9 trifft, von deren Spiegelfläche zum Empfänger 14 hin reflektiert wird und dann in diesem ein ausreichend starkes, z. B. elektrisches Signal auslöst. Dies gilt für alle am Fahrweg 1 vorhandenen Markierungen 9i, 9j usw., so dass der Sensor 11 während der Fahrt in gegebenen örtlichen und zeitlichen Abständen Signale "Markierung vorhanden" abgibt.

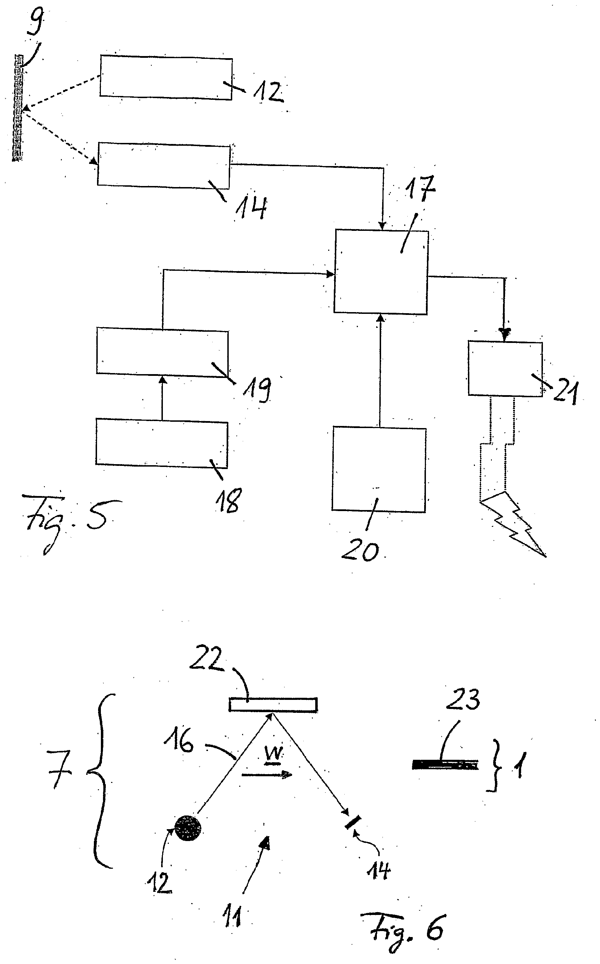

Damit diese Signale in exakte Positionssignale umgewandelt werden, kann die erfindungsgemäße Vorrichtung z. B. entsprechend Fig. 5 ausgebildet sein. Danach ist der Empfänger 14 an eine elektrische Auswerteschaltung 17 angeschlossen, die z. B. als Microprozessor, Rechner od. dgl. ausgebildet ist. An dieselbe Auswerteeinheit 17 ist ein Empfänger 18 eines lokalen oder eines globalen, satellitengestützten Navigationssystems angeschlossen, gegebenenfalls über einen Block 19, in dem die Ausgangssignale des Empfängers 18 in geeigneter Weise aufbereitet werden. Weiterhin ist eine Speichereinrichtung 20 mit der Auswerteeinheit 17 verbunden, in der die anhand der Fig. 3 erläuterte Liste bzw. die in dieser Liste vorhandenen Positionsdaten abgelegt sind. Ein Ausgang der Auswerteeinheit 17 ist schließlich in einer nicht näher dargestellten, an sich bekannten Weise mit einem im Fahrzeug 7 untergebrachten Funksystem 21 verbunden, von dem Daten zwischen dem Fahrzeug 7 und einer zentralen Leitstelle ausgetauscht werden können (z. B. ZEVrail Glasers Annalen, Sonderheft "Transrapid", Oktober 2003, Seiten 88 bis 94 oder "Magnetbahn Transrapid - Die neue Dimension des Reisens", Hestra-Verlag Darmstadt, Seiten 60 bis 68).

Die Arbeitsweise der Vorrichtung nach Fig. 5 ist bei Anwendung üblicher elektronischer Datenverarbeitungsmittel im wesentlichen wie folgt:
Bei vorzugsweise permanent eingeschaltetem Sender 12 passiert das Fahrzeug 7 nacheinander die längs des Fahrwegs 1 angebrachten Markierungen 9. Bei jedem Vorbeigang an einer solchen Markierung 9 gibt der Empfänger 14 des Sensors 11 ein die Existenz bzw. das Erkennen einer Markierung 9 anzeigendes, z. B. elektrisches Signal "Markierung vorhanden" ab, das der Auswerteeinheit 17 zugeführt wird. Die Auswerteeinheit 17 wird außerdem permanent vom Empfänger 18 des Navigationssystems mit aktuellen Ortssignalen versorgt, die Auskunft darüber geben, in welchem Planquadrat 15 (Fig. 2) sich das Fahrzeug 7 gerade befindet. Wird die Erkennung einer Markierung 9 signalisiert, vergleicht die Auswerteeinheit 17 die zugehörigen aktuellen Ortssignale mit den in der Speichereinrichtung 20 abgelegten Positionsdaten. Aus diesem Vergleich wird dann ein Positionssignal erzeugt, das Auskunft über die tatsächlich passierte Markierung 9 bzw. den dieser zugeordneten exakten Ort des Fahrzeugs 7 gibt und über das Funksystem 21 der zentralen Leitstelle zugeleitet wird.

Die Erfindung bringt mehrere Vorteile mit sich. Vorteilhaft ist u. a., dass die Markierungen 9 nicht codiert werden müssen, um genaue Ortssignale zu liefern, was die Herstellung und die Montage der Markierungen 9 wesentlich vereinfacht und den Rauschabstand wesentlich vergrößert. Weiterhin können für die Empfänger 18 des Navigationssystems handelsübliche, z. B. im Kraftfahrzeugbereich vielfältig eingesetzte und daher preisgünstige Bauelemente verwendet werden. Anstelle eines globalen Navigationssystems können in vorteilhafter Weise auch lokale, z. B. nur dem Betrieb einer Magnetschwebebahn od. dgl. dienende Navigationssysteme vorgesehen werden, die von globalen Navigationssystemen unabhängig sind. Im Prinzip reichen hierfür eindimensional arbeitende Navigationssysteme aus, die außerdem zum Empfang in Tunneln z. B. am Anfang und am Ende eines jeden Tunnels angeordnet werden können. Weiterhin arbeitet der Empfänger 18 des Navigationssystems unabhängig vom Fahrweg 1, so dass er irgendwo im Fahrzeug 7 untergebracht werden kann und keinen Platz in der Nähe des Fahrwegs 1 beansprucht. Schließlich ist die Gefahr, dass sich beim Ablesen der Markierungen 9 Lesefehler ergeben, äußerst gering, da die Markierungen 9 nur erkannt, aber nicht vom Sensor 11 identifiziert werden brauchen.

Die Erfindung ist nicht auf die beschriebenen Ausführungsbeispiele beschränkt, die auf vielfache Weise abgewandelt werden können. Dies gilt beispielsweise für den Sensor 11. Dieser kann alternativ zu Fig. 4, wie Fig. 6 anhand eines zweiten Ausführungsbeispiels zeigt, einen fest im Fahrzeug 7 installierten Spiegel 22 aufweisen, der den vom Sender 12 emittierten Lichtstrahl 16 permanent zum Empfänger 14 reflektiert. Als Markierungen 23 sind in diesem Fall den Lichtstrahl 16 unterbrechende Bauelemente vorgesehen, die längs des Fahrwegs 1 so angeordnet sind, dass sie beim Vorbeifahren des Fahrzeugs 7 einen Spalt zwischen dem Spiegel 22 und dem Sender 12 und/oder Empfänger 14 passieren und dadurch den Lichtstrahl 16 kurzzeitig unterbrechen. Das Vorhandensein einer Markierung 23 wird in diesem Fall durch die Unterbrechung anstatt durch das Erscheinen des Lichtsignals 16 am Empfänger 14 angezeigt. Alternativ können aber auch induktiv und anderswie arbeitende Kombinationen von Sensoren und Markierungen vorgesehen werden. Schließlich versteht sich, dass die verschiedenen Merkmale auch in anderen als den beschriebenen und dargestellten Kombinationen verwendet werden können.

## Patentansprüche

1. Vorrichtung zur Erzeugung von Positionssignalen, die die Position eines spurgebundenen Fahrzeugs (7) längs eines Fahrwegs (1) angeben, enthaltend eine Vielzahl von längs des Fahrwegs (1) angeordneten Markierungen (9, 23), wenigstens einen am Fahrzeug (7) angeordneten Sensor (11) zum Abtasten der Markierungen (9, 23) und zur Abgabe von dadurch ermittelten Signalen und eine an den Sensor (11) angeschlossene Auswerteeinheit (17) zur Erzeugung der Positionssignale durch Auswertung der von den Markierungen (9, 23) erzeugten Signalen, wobei die Markierungen (9, 23) so ausgebildet sind, dass der Sensor (11), wenn das Fahrzeug (7) eine Markierung (9, 23) passiert, ein Signal "Markierung vorhanden", andernfalls ein Signal "Markierung nicht vorhanden" abgibt, und wobei die Auswerteeinheit (17) mit einer Speichereinrichtung (20) verbunden ist, in der den Markierungen (9, 23) zugeordnete Positionsdaten gespeichert sind, **dadurch gekennzeichnet, dass** das Fahrzeug (7) einen an die Auswerteeinheit (17) angeschlossenen Empfänger (18) eines Navigationssystems aufweist, der zur Abgabe von unabhängig von der Erfassung der Markierungen ermittelten, aktuellen Ortssignalen bestimmt ist, und die Auswerteeinheit (17) so eingerichtet ist, dass sie beim Empfang eines jeden Signals "Markierung vorhanden" aus einem Vergleich des aktuellen Ortssignals mit den gespeicherten Positionsdaten ein der Markierung (9, 23) zugeordnetes Positionssignal abgibt.

2. Vorrichtung nach Anspruch 1, **dadurch gekennzeichnet, dass** der Sensor (11) einen einen Lichtstrahl (16) aussendenden Sender (12) und einen Empfänger (14) für den Lichtstrahl (16) enthält und die Markierungen (9) als Spiegel ausgebildet sind, die beim Passieren des Fahrzeugs (7) den vom Sender (12) erzeugten Lichtstrahl (16) zum Empfänger (14) umlenken.

3. Vorrichtung nach Anspruch 1, **dadurch gekennzeichnet, dass** der Sensor (11) einen einen Lichtstrahl (16) aussendenden Sender (12), einen Empfänger (14) für den Lichtstrahl (16) und einen Spiegel (22) enthält, der den vom Sender (12) erzeugten Lichtstrahl (16) zum Empfänger (14) umlenkt, und dass die Markierungen (23) als den Lichtstrahl (16) unterbrechende Bauelemente ausgebildet sind.

4. Vorrichtung nach Anspruch 2 oder 3, **dadurch gekennzeichnet, dass** die Lichtquelle einen Laser enthält.

5. Vorrichtung nach einem der Ansprüche 1 bis 4, **dadurch gekennzeichnet, dass** die Auswerteeinheit (17) mit einem am Fahrzeug (7) montierten Funksystem (21) verbunden ist.

## Claims

1. A device for producing position signals which indicate the position of a rail vehicle (7) along a route (1), containing a plurality of markers (9, 23) arranged along the route (1), at least one sensor (11) arranged on the vehicle (7) for scanning the markers (9, 23) and for delivering signals thereby detected and an evaluation unit (17) attached to the sensor (11) for generating the position signals through evaluation of the signals produced by the markers (9, 23), wherein the markers (9, 23) are configured in such a manner that when the vehicle (7) passes a marker (9, 23) the sensor (11) emits a "Marker present" signal, otherwise a "No marker present" signal, and wherein the evaluation unit (17) is connected to a storage device (20) in which position data assigned to the markers (9, 23) are stored, **characterized in that** the vehicle (7) has a receiver (18) of a navigation system attached to the evaluation unit (17) which is intended to emit current location signals detected independently of the detection of markers, and the evaluation unit (17) is set up in such a manner that on receiving each "Marker present" signal it emits a position signal assigned to the marker (9, 23)from a comparison of the current location signal with the stored position data.

2. The device according to claim 1, **characterized in that** the sensor (11) contains a transmitter (12) emitting a light beam (16) and a receiver (14) for the light beam (16) and the markers (9) are embodied as mirrors which deflect the light beam (16) produced by the transmitter (12) to the receiver (14) when the vehicle (7) goes past.

3. The device according to claim 1, **characterized in that** the sensor (11) contains a transmitter (12) emitting a light beam (16), a receiver (14) for the light beam (16) and a mirror (22) which deflects the light beam (16) produced by the transmitter (12) to the receiver (14) and that the markers (23) are embodied as structural elements which interrupt the light beam (16) .

4. The device according to claim 2 or 3, **characterized in that** the light source contains a laser.

5. The device according to one of claims 1 to 4, **characterized in that** the evaluation unit (17) is connected to a radio system (21) mounted on the vehicle (7).

## Revendications

1. Dispositif pour la génération de signaux de position, lesquels indiquent la position d'un véhicule guidé (7) le long d'une voie (1), comprenant une pluralité de repères (9, 23) disposés le long de la voie (1), au moins un capteur (11) disposé sur le véhicule (7) pour balayer les repères (9, 23) et pour l'émission de signaux déterminés de la sorte, et une unité d'évaluation (17) raccordée au capteur (11) pour la génération des signaux de position par évaluation des signaux générés par les repères (9, 23), dans lequel les repères (9, 23) sont réalisés de telle sorte que le capteur (11), lorsque le véhicule (7) passe à côté d'un repère (9, 23), émet un signal « repère présent » et dans le cas contraire, un signal « repère non présent », et dans lequel l'unité d'évaluation (17) est reliée à un dispositif de stockage (20) dans lequel des données de position associées aux repères (9, 23) sont enregistrées, **caractérisé en ce que** le véhicule (7) présente un récepteur (18), raccordé à l'unité d'évaluation (17), d'un système de navigation, lequel est prévu pour l'émission de signaux de lieu actuels déterminés indépendamment de la détection des repères, et que l'unité d'évaluation (17) est étudiée de telle sorte qu'à la réception de chaque signal « repère présent », elle émet un signal de position associé au repère (9, 23) à partir d'une comparaison entre le signal de lieu actuel et les données de position enregistrées.

2. Dispositif selon la revendication 1, **caractérisé en ce que** le capteur (11) comprend un émetteur (12) émettant un faisceau lumineux (16) et un récepteur (14) pour le faisceau lumineux (16) et que les repères (9) sont réalisés en tant que miroir, lesquels, lorsque le véhicule (7) passe, dévient le faisceau lumineux (16) généré par l'émetteur (12) vers le récepteur (14).

3. Dispositif selon la revendication 1, **caractérisé en ce que** le capteur (11) comprend un émetteur (12) émettant un faisceau lumineux (16), un récepteur (14) pour le faisceau lumineux (16) et un miroir (22) qui dévie le faisceau lumineux (16) généré par l'émetteur (12) vers le récepteur (14), et que les repères (23) sont réalisés en tant composants interrompant le faisceau lumineux (16).

4. Dispositif selon la revendication 2 ou 3, **caractérisé en ce que** la source lumineuse comprend un laser.

5. Dispositif selon l'une des revendications 1 à 4, **caractérisé en ce que** l'unité d'évaluation (17) est reliée à un système radio (21) monté sur le véhicule (7) .
